# EUROPEAN PATENT SPECIFICATION

(11) **EP 3 601 911 B1**
(45) Date of publication and mention of the grant of the patent: **12.11.2025**
(21) Application number: 18728951.7
(22) Date of filing: 20.03.2018
(51) Int. Cl.: F25D 15/00, F25D 31/00, F25D 3/08, F28D 20/02, F25B 21/02

(54) **USE OF THERMOSTATIC BATTERIES AND CHARGING UNITS**
VERWENDUNG VON THERMOSTATISCHEN BATTERIEN UND LADEEINHEITEN
UTILISATION DE BATTERIES THERMIQUES ET D'UNITÉS DE CHARGE

(30) Priority: 20.03.2017 BE 201705171
(43) Date of publication of application: 05.02.2020
(73) Proprietor: Colruyt Group, 1500 Halle (BE)
(72) Inventor: COUSAERT, Erik, 1500 Halle (BE)
(74) Representative: Gevers Patents
(86) International application number: PCT/IB2018/000299
(87) International publication number: WO 2018/172844

(56) References cited:
- WO-A1-2014/019567
- BE-A4- 1 001 540
- DE-A1- 2 842 180
- JP-A- 2002 213 853
- US-A- 3 018 638
- US-A- 5 689 970

## Description

### Technical field

The present invention relates to a thermostatic battery, particularly for thermostatically storing and transporting goods such as foodstuffs, as described in the preamble to the first claim. The invention relates to a use of the thermostatic battery and of the charging unit.

### Background art

For thermostatically storing and transporting goods stored in a storage volume, use is often made of a thermostatic battery, for example for covering the goods. More in particular, goods that are sensitive to changes in temperature can be stored and transported in the storage volume while it is kept in a substantially thermostatic state by the thermostatic battery. Thus, for example, foodstuffs can be safely stored and transported, for example by supermarket staff when fresh foodstuffs are delivered, or by supermarket customers while doing their groceries.

Such thermostatic batteries are known in the art, for example from the patent application WO2014019567, where such a thermostatic battery, as described in the preamble to the first claim, comprises a container. Such a container is defined by liquid-tight container walls enclosing a heat medium, wherein the heat medium is arranged for storing thermal energy. Such thermostatic batteries are arranged for maintaining, during a discharging phase, a substantially thermostatic state in a storage volume, such as the volume in which goods are stored that are sensitive to changes in temperature. Such a storage volume can be covered by the thermostatic battery and can for example be transported, for example by a supermarket customer placing these goods in a space arranged for that purpose in their shopping cart. Such thermostatic batteries known from the art, before said discharging phase, first need to be charged during a charging phase. WO2014019567 thereto provides at least one duct located within the heat medium and connected to an in- and outlet in a side wall of the container. During the charging phase, these thermostatic batteries from the art require the in- and outlet, provided in the side wall of the container of the thermostatic battery, to be coupled to valves of a charging unit, which, after coupling, causes a liquid to pass through the duct, and thus through the heat medium of the container. Thus, when it is required of the thermostatic battery to keep a storage volume hot or cold during the discharging phase, a hot or cold liquid, respectively, is made to flow through the duct. In this manner, the flowing liquid exchanges thermal energy with the heat medium enclosed by the container walls, and thus, in other words, a heat exchanger is provided in the heat medium. Then, the charged thermostatic battery can exchange this stored thermal energy during the discharging phase with the storage volume through its lower container wall, for example by conducting the heat from the storage volume toward the heat medium or the other way around, depending on the desired thermostatic state in the storage volume.

Such a thermostatic battery should, in order to maintain an optimal functioning of the thermostatic battery, be charged regularly. It is, for example, a good habit to recharge the thermostatic battery after every us, for example by a supermarket customer. Because of the large number of customers in a supermarket, the thermostatic battery needs to be charged very often. For an efficient and economically favorable operation, it is furthermore advantageous to charge the used thermostatic batteries in a quick and simple manner, for example to transfer them in a quick and simple manner to the charging unit where the thermostatic batteries can be charged, for example to avoid the need of purchasing an excess amount of thermostatic batteries, or to avoid the need of hiring additional staff for executing this task. In the state of the art, this entails that the in- and outlet of the thermostatic battery should be able to be coupled to the valves of the charging unit frequently and quickly. This is, however, not a simple matter, as coupling an in- and outlet to a valve requires concentration. Furthermore, the coupling between the in- and outlet and the valve can lead to expensive damage of both the in- and outlet and the valve as well as the container, particularly if a quick action is required during the charging phase. Such expensive damage is for example leaking valves or leaking in- and outlets.

### Description of the invention

An object of the present invention is to provide use of a thermostatic battery and of a charging unit for maintaining a storage volume in a thermostatic state, by means of which the problem described above is remedied.

To this end, a thermostatic battery is provided which comprises a container. The container of the thermostatic battery is defined by closed container walls enclosing a container volume. The container comprises, for example, an upper container wall, an opposite lower container wall and at least one container side wall connecting the upper container wall and the lower container wall. More in particular, the container comprises at least one container wall, for example the lower container wall, which comprises a first heat-conducting material for forming a conductive container wall. The container further comprises a heat medium arranged for storing thermal energy, enclosed by the container walls, wherein the heat medium at least partially, for example completely, fills the container. To this end, the container walls comprise a layer, for example a thin layer of plastic, which is liquid-tight with regard to the heat medium. The thermostatic battery is for example arranged to at least partially delimit a space outside of the container, such as a storage volume, during a discharging phase, and is for example arranged to maintain the storage volume in a substantially thermostatic state during the discharging phase, by exchanging thermal energy between the heat medium and the storage volume, mainly through the conductive container wall as opposed to through the other container side walls, for example completely through the conductive container wall. The thermostatic battery of the present invention is characterized in that the thermostatic battery is arranged to exchange thermal energy during a charging phase mainly through the conductive container wall as opposed to through the other container walls, for example completely through the conductive container wall, for storing the thermal energy in the heat medium. The thermostatic battery is for example arranged to exchange thermal energy during the charging phase between the heat medium and a charging unit, mainly through the conductive container wall as opposed to through the other container walls, for example completely through the conductive container wall. To this end, the thermostatic battery is characterized in that the conductive container wall is provided, wherein the conductive container wall comprises a first heat-conducting material.

A non-claimed example provides a thermostatic battery which is characterized in that a conductive container wall is provided, wherein the conductive container wall comprises a first heat-conducting material, offers the advantage that the thermostatic battery is arranged to exchange thermal energy during the charging phase mainly through the conductive container wall. Exchanging thermal energy mainly through the conductive container wall is a result of good thermal conductivity properties of the first heat-conducting material, for example when compared to the thermal conductivity properties of the heat medium and the liquid-tight material, which promotes thermal energy exchange between the heat medium and the conductive container wall, for example between the heat medium on the one hand and the space outside of the container, such as the storage volume or the charging unit, on the other hand, during the discharging and charging phases, respectively, through the conductive container wall. The thermal energy stored in the heat medium is for example efficiently, for example with a high heat flux, extracted from the heat medium by heat conduction through the conductive container wall, in parallel with less efficient heat transport, for example with lower heat flux, through the other container walls. The improved thermal conductivity between the heat medium and for example the storage volume or the charging unit, through the conductive container wall, achieved by providing the first heat-conducting material in the conductive container wall, allows the charging phase of the thermostatic battery to take place in an efficient, for example speedy manner, mainly, for example completely, through the conductive container wall, without the need for providing additional ducts serving as heat exchangers in the heat medium, as is the case in the state of the art. This can for example be achieved by providing the charging unit in the space outside of the container, such as the space outside of the conductive container wall. More in particular, this allows the in- and outlets as well as the valves for coupling to the in- and outlets to be omitted from the thermostatic battery from the state of the art, thus avoiding the problems of the state of the art mentioned above. As an added effect, it can be stated that, since the thermostatic battery of the present invention uses the same mechanism, namely providing the conductive container wall, for charging and discharging the thermostatic battery, a minimum of elements is required for operation of the battery, which, among other things, lowers costs of production and maintenance and, moreover, creates space within the container for providing large quantities of heat medium. Furthermore, this has the added effect that the weight of the thermostatic battery is limited, which brings about ergonomic advantages for the users of the thermostatic battery, for example supermarket customers having to frequently lift and lower the thermostatic battery, and for example supermarket staff, who need to transfer the thermostatic batteries to the charging unit in a quick and efficient manner. A further effect of the present invention is that the presence of the conductive container wall ensures that the heat medium can be optimized for head storage, since the conductive container wall to a large extent, for example completely, takes up the function of heat conduction. An added technical effect of the present invention is that the thermostatic battery can be charged relatively quickly, for example since the conductive container wall has good thermal conductivity properties, allowing the heat medium to be quickly heated or cooled. More in particular, the thermostatic battery according to some embodiments of the present invention offers the advantage that a charging rate of at least 14 Wh/(s m²) (Watt hour over second and meter squared) can be achieved, for example as a peak charging rate, for example when commencing charging of the thermostatic battery.

In a non-claimed example of the present invention, the thermostatic battery is provided with a heat insulation layer on at least one container wall, for example adjacent to at least one container wall of for example mounted to at least one container wall, for example mounted to at least the upper container wall, but the heat insulation layer leaves at least part of the conductive container wall uncovered.

Providing uncovered parts on the conductive container wall allows thermal energy to be exchanged between the heat medium and the conductive container wall. For example, the heat insulation layer leaves at least part of the conductive container wall uncovered for exchanging thermal energy between the heat medium on the one hand and the space outside of the container, such as the storage volume or the charging unit, on the other hand, mainly, for example completely, through the conductive container wall, as opposed to through the other container walls.

In a non-claimed example of the present invention, the heat medium comprised in the thermostatic battery at least partially encloses a heat conductor made from a second heat-conducting material, and the heat conductor is adjacent to the conductive container wall. The heat conductor may for example be adjacent to the liquid-tight material, particularly the liquid-tight layer of the conductive container wall, or to the first heat-conducting material, particularly the layer with the first heat-conducting material of the conductive container wall, both comprised in the conductive container wall. In an embodiment of the present invention, the heat conductor arranged for conducting heat from the heat medium to the conductive container wall, for example as a result of the heat conductor exhibiting good thermal conductivity properties, and for example as a result of the heat conductor providing a large contact surface with the heat medium, ensuring a good exchange of thermal energy between the heat medium and the heat conductor.

Providing a thermostatic battery which is characterized in that the heat conductor is adjacent to the conductive container wall, offers the advantage that the thermostatic battery is arranged to exchange thermal energy during the charging phase mainly through the conductive container wall. Exchanging thermal energy mainly through the conductive container wall is a result of good thermal conductivity properties of the heat conductor, for example when compared to the thermal conductivity properties of the heat medium and the liquid-tight material, and of the preferably large contact surface provided between the heat conductor and the heat medium, which promotes thermal energy exchange between the heat medium and the conductive container wall, for example between the heat medium on the one hand and the space outside of the container, such as the storage volume or the charging unit, on the other hand, during the discharging and charging phases, respectively, through the conductive container wall. The heat conductor for example efficiently, for example with a high heat flux, conducts heat extracted from the heat medium by heat conduction toward the conductive container wall in an effective manner, in parallel with less efficient heat transport, for example with lower heat flux, through the heat medium itself, which for example transfers heat by conduction and/or convection in a less effective manner to all container walls. The improved thermal conductivity between the heat medium and for example the storage volume or the charging unit, through the conductive container wall, achieved by providing the adjacent heat conductor, allows the charging phase of the thermostatic battery to take place in an efficient, for example speedy manner, mainly, for example completely, through the conductive container wall, as opposed to through the other container walls.

In a non-claimed example of the present invention, the heat medium is arranged to exchange thermal energy during the charging phase mainly through the conductive container wall, as a result of the heat conductor being mounted to the conductive container wall. The heat conductor is mounted to the liquid-tight material or to the first heat-conducting material of the conductive container wall. Preferably, the heat conductor is mounted to the first heat-conducting material comprised in the conductive container wall.

Attaching the heat conductor to the conductive container wall offers the advantage that the thermal energy can be exchanged even better between the heat medium and the conductive container wall. This offers the advantage that, for example, the thermal energy can be exchanged even better between the heat medium on the one hand, and the space outside of the container, such as the storage volume or the charging unit, on the other hand, during the discharging and charging phases, respectively, through the conductive container wall. The good, effective thermal conduction of the heat conductor has the result that, for example, the thermal energy is mainly exchanged between the heat medium on the one hand, and the space outside of the container, such as the storage volume or the charging unit, on the other hand, during the discharging and charging phases, respectively, through the conductive container wall.

In a non-claimed example of the present invention, the thermal conductivity of the first heat-conducting material comprised in the conductive container wall is between 1 W/mK and 5000 W/mK, preferably between 230 W/mK and 5000 W/mK.

Providing the first heat-conducting material with a thermal conductivity of between 1 W/mK and 5000 W/mK, and preferably between 230 W/mK and the 5000 W/mK, offers the advantage that the conductive container wall comprising the first heat-conducting material is a container wall with good thermal conductivity, for example exhibiting better thermal conductivity properties than the heat medium and the liquid-tight material.

In a non-claimed example of the present invention, the first heat-conducting material is one of copper, aluminum, stainless steel, bronze, carbon fiber composite, graphite composite, graphene composite and nanocarbon composite.

Providing the first heat-conducting material from one of copper, aluminum, stainless steel, bronze, carbon fiber composite, graphite composite, graphene composite and nanocarbon composite offers the advantage that the conductive container wall is a strongly thermally conductive container wall, for example exhibiting better thermal conductivity properties than the heat medium and the liquid-tight material.

In a non-claimed example of the present invention, the thickness of the first heat-conducting material comprised in the conductive container wall is substantially homogenous over the entire conductive container wall, and the thickness is preferably between 0.8 mm and 10 mm, more preferably between 2 mm and 6 mm.

Providing the layer with the first heat-conducting material comprised in the conductive container wall being between 0.8 mm and the 10 mm, more preferably between 2 mm and the 6 mm, offers an optimal balance between good thermal conductivity properties and the weight of the thermostatic battery.

In a non-claimed example of the present invention, the liquid-tight layer of the conductive container wall and the layer with the first heat-conducting material of the conductive container wall are separate layers. In an embodiment of the present invention, the thickness of the liquid-tight layer is between 0.1 mm and 2 mm, preferably between 0.1 mm and 1 mm. In an alternative embodiment of the present invention, the liquid-tight layer and the layer with the first heat-conducting material, both comprised in the conductive container wall, are one layer. More in particular, according to an alternative embodiment of the present invention, the liquid-tight material and the first heat-conducting material are the same material, particularly the first heat-conducting material.

Providing the liquid-tight layer of the conductive container wall and the layer with the first heat-conducting material of the conductive container wall in separate layers offers the advantage that each layer can be optimized for its function, particularly making the container liquid-tight and conducting thermal energy, respectively. Providing the liquid-tight layer of the conductive container wall and the layer with the first heat-conducting material of the conductive container wall as one layer offers the advantage that the conductive container wall can conduct thermal energy even better, since a separate, thin, liquid-tight layer, for example a thin layer of plastic, has thermal conductivity properties that are less strong than those of the first heat-conducting material.

In a non-claimed example of the present invention, the first heat-conducting material is provided with a minimal coating applied onto the first heat-conducting material between the first heat-conducting material and the heat medium, with substantially no detrimental effect with regard to the thermal conductivity of the conductive container wall.

Providing a minimal coating on the first heat-conducting material offers the advantage that the first heat-conducting material is protected against corrosion, while the thermal conductivity of the conductive container wall is preserved.

In a non-claimed example of the present invention, the thermal conductivity of the conductive container wall is between 1 W/mK and 5000 W/mK, preferably between 230 W/mK and 5000 W/mK. The conductive container wall, whether or not provided with a liquid-tight layer different from the layer with the first heat-conducting material, and whether or not provided with a minimal coating, according to the embodiment of the present invention has a thermal conductivity of between 1 W/mK and 5000 W/mK, preferably between 230 W/mK and 5000 W/mK.

Providing a conductive container wall provided with a different liquid-tight layer and layer with the first heat-conducting material, and provided with a minimal coating with a thermal conductivity of between 1 W/mK and 5000 W/mK, preferably between 230 W/mK and 5000 W/mK, offers the advantage that a good exchange of thermal energy can occur through the conductive container wall.

In a non-claimed example of the present invention, the conductive container wall is the container wall with the strongest thermal conduction of all container walls of the container.

Providing the container of which the conductive container wall exhibiting the highest thermal conduction offers the advantage that the exchange of thermal energy mainly, for example completely, occurs through the conductive container wall.

In a non-claimed example of the present invention, the container walls, for example the lower container wall, have a substantially planar shape, for example a completely planar shape. More in particular, the conductive container wall preferably has substantially no curvature.

Providing a planar shape of the container walls offers the advantage that simple manufacturing processes can be used for manufacturing the thermostatic battery, particularly when compared to curved container walls. Additionally, the planar shape of the conductive container wall offers the advantage that for example during the discharging phase, all points at a same depth in the storage volume, for example all products at the bottom of the storage volume, are spaced equally far from the thermostatic battery, which ensures a more homogenous cooling.

In a non-claimed example of the present invention, the conductive container wall has a curved shape, for example a sinusoidal curvature over at least half a period.

Providing a curved conductive container wall offers the advantage that the surface area of the conductive container wall is enlarged when compared to a planar conductive container wall which is for example intended to cover the same storage volume. The enlarged surface increases the conductivity of thermal energy between the heat medium provided in the container and the storage volume, through the conductive container wall.

In a non-claimed example of the present invention, the heat conductor consists of a porous mesh, and the heat medium, which at least partially encloses the heat conductor, at least partially, for example completely, fills the pores of the porous mesh.

Providing a heat conductor consisting of a porous mesh in which the heat medium at least partially fills the pores, offers the advantage that the surface area of the heat conductor is increased. Het increased contact surface between the heat medium and the heat conductor improves the exchange of thermal energy between the heat medium on the one hand, and the space outside of the container, such as the storage volume or the charging unit, on the other hand, during the discharging and charging phases, respectively, through the conductive container wall, since more heat can be transported via the heat conductor. Furthermore, providing a porous mesh as the heat conductor offers the advantage that the thermostatic battery can be made lighter. Furthermore, the porous mesh creates space within the container volume which can be taken up by heat medium.

In a non-claimed example of the present invention, the porous mesh of the heat conductor consists of an open-cell porous mesh consisting of interconnected pores.

Providing a heat conductor consisting of an open-cell porous mesh in which the heat medium at least partially, for example completely fills the pores, offers the advantage that additional heat transport via heat-convection of the heat medium remains possible. Furthermore, the open-cell porous mesh is advantageous when the heat medium consists of a material that expands when heated or cooled, since in such a case the mechanical stress, for example the pressure exerted onto the pores on the heat conductor, remains limited.

In a non-claimed example of the present invention, the porous mesh has a porosity relative to the volume of the porous mesh, more in particular in terms of the ratio of the volume circumscribed by the outer edges of the heat conductor if the heat conductor contained no pores, and the actual volume taken up by the porous mesh, of between 75% and 98%, preferably a porosity relative to the volume of the porous mesh of between 88% and 95%.

The heat conductor being provided with a porosity between 75% and 98% offers the advantage that a sufficiently large volume is reserved for the heat medium, which is responsible for storing thermal energy, while sufficient thermal conduction is ensured by the porous heat conductor. The inventors have found that a porosity of between 88% and 95% ensures an optimal balance between heat medium and heat conductor. The exact porosity depends on the materials used as heat medium and as heat conductor.

In a non-claimed example of the present invention, the ratio of surface area to volume of the heat conductor, measured using a 'µCT measurement technique' (micro computed tomography scanning technique), is between 300m²/m³ and 1500m²/m³.

Providing a surface area to volume ratio for the heat conductor of between 300m²/m³ and 1500m²/m³ offers the advantage that at this ratio, an optimal balance is found between a good mechanical stability and a satisfactory thermal conductivity of the heat conductor on the one hand, and a sufficiently large contact surface with the heat medium for exchanging thermal energy on the other hand. The exact ratio depends on the materials used as heat medium and as heat conductor.

In a non-claimed example of the present invention, the pores of the porous mesh of which the heat conductor consists, have an average cell diameter, measured using a 'µCT measurement technique', of 10 mm or smaller.

The average cell diameter of 10 mm or less offers the advantage that the optimal ratio is achieved between the size of the volume provided for the heat medium and the size of the contact surface between the heat medium and the heat conductor. The exact ratio depends on the materials used as heat medium and as heat conductor.

In an embodiment of the present invention, the second heat-conducting material from which the heat conductor is made is a metal foam.

The heat conductor being made from a metal foam offers the advantage that both a high mechanical strength and a high thermal conductivity are achieved, while the weight and the volume taken up in the container remain limited.

In a non-claimed example of the present invention, the heat conductor is arranged in the container according to a fin structure. In this embodiment of the invention, the heat conductor consists of a series of fins, for example mounted perpendicular to the container walls, such as perpendicular to the conductive container wall.

Providing the heat-conducting material as a series of fins in the container offers the advantage that when one of the fins is damaged, it can be easily repaired, for example by replacing the damaged fin.

In a non-claimed example of the present invention, the heat conductor extends substantially, for example completely, from the conductive container wall up to an opposite container wall, for example in a direction perpendicular to the conductive container wall.

The heat conductor substantially, for example completely, extending from the conductive container wall up to an opposite container wall, offers the advantage that the heat medium which is farther from the conductive container wall, for example the heat medium which is located at an opposite container wall of the conductive container wall, is also quickly heated or cooled by exchanging thermal energy with the heat conductor.

In a non-claimed example of the present invention, the heat conductor is arranged for maximizing the contact surface with the heat medium, for example by providing the heat conductor with a coarse surface.

The maximized contact surface of the heat conductor with the heat medium offers the advantage that a good exchange of thermal energy can occur between the heat medium and the heat conductor, more in particular between the heat medium and the conductive container wall through the heat conductor.

In a non-claimed example of the present invention, the thermal conductivity of the second heat-conducting material from which the heat conductor is made, is between 27 W/mK and 5000 W/mK, preferably between 230 W/mK and 5000 W/mK.

The embodiment in which the thermal conductivity of the second heat-conducting material from which the heat conductor is made, is between 27 W/mK and 5000 W/mK, preferably between 230 W/mK and 5000 W/mK, offers the advantage that heat can be transferred in an efficient manner from the heat medium to the conductive container wall.

In a non-claimed example of the present invention, the second heat-conducting material from which the heat conductor is made, is one of aluminum, stainless steel, bronze, copper, carbon fiber composite, graphite composite, graphene composite and nanocarbon composite.

Making the second heat-conducting material from one of copper, aluminum, stainless steel, bronze, carbon fiber composite, graphite composite, graphene composite and nanocarbon composite offers the advantage that thermal energy can be transferred in an efficient manner from the heat medium to the conductive container wall.

The use of aluminum offers the advantage that a high heat conduction is achieved while the weight and the cost of the heat conductor still remain low. The use of stainless steel offers the advantage that a good resistance against corrosion is achieved. The use of copper offers the advantage that both a good heat conduction and a good resistance against corrosion are achieved.

In a non-claimed example of the present invention, the heat medium is a phase-changing material such as a eutect or a pure substance such as water or a paraffine, arranged to change phase at a peak temperature adapted to the desired thermostatic state of the storage volume. The peak temperature of the phase-changing material relates to the temperature range in which the phase-changing material changes phase, and therein takes up or gives off the largest amount of latent heat, as indicated on the information leaflet of the phase-changing material. If the phase-changing material changes phase at a single temperature rather than in a temperature range, such as water moving to/from a solid state from/to a liquid state at a temperature of 0°C, then this temperature is the peak temperature.

Providing a phase-changing material offers the advantage that the heat medium is thus optimized for energy storage, since the phase-changing material can achieve a high energy density. Furthermore, phase-changing materials ensure that the storage volume can be kept substantially thermostatic at the peak temperature. The choice for the phase-changing material as a heat medium depends, among other things, on the desired thermostatic state, and for example on the second heat-conducting material used as heat conductor.

In a non-claimed example of the present invention, the phase-changing material contains one of a pure substance, such as paraffines or water, and a eutect. Preferably, the phase-changing material contains one of paraffines and water. In an embodiment of the present invention, the heat medium is a phase-changing material with a peak temperature between -20°C and 100°C, depending on the desired thermostatic state of the storage volume.

Manufacturing the phase-changing material from a pure substance, preferably from paraffines, offers the advantage that a corrosion-resistant heat medium is achieved. Furthermore, the use of paraffines has the advantage that the heat medium is stable for a long time, for example that the peak temperature of the phase-changing material remains substantially constant for a long time, for example after thousands of charging and discharging cycles. Manufacturing the phase-changing material from a eutect, for example based on water, has the advantage that a higher energy density can be achieved and that the material is non-flammable or poorly flammable. The use of a eutect is, however, susceptible to corrosion and long-term instability by the absorption of water in the eutect. Providing a phase-changing material with a peak temperature lower than 0°C offers the advantage that frozen goods stored in the storage volume remain frozen. Providing a phase-changing material with a peak temperature above room temperature offers the advantage that heated goods stored in the storage volume remain hot.

In a non-claimed example of the present invention, the thermostatic battery has a charging state between 0% and 100%, indicating to what degree the thermostatic battery is charged. Here, the 0% state corresponds to the absence of latent thermal energy in the heat medium, for example in case the desired thermostatic state of the storage volume requires a higher temperature than the room temperature in which the storage volume is intended to be in the discharging phase, where the temperature of the phase-changing material of the heat medium is below the peak temperature, or for example in case the desired thermostatic state of the storage volume requires a lower temperature than the room temperature in which the storage volume is intended to be in the discharging phase, where the temperature of the phase-changing material of the heat medium is above the peak temperature. Here, the 100% state corresponds to the full presence of latent thermal energy in the heat medium, for example in case the desired thermostatic state of the storage volume requires a higher temperature than the room temperature in which the storage volume is intended to be in the discharging phase, where the temperature of the phase-changing material of the heat medium is above the peak temperature, or for example in case the desired thermostatic state of the storage volume requires a lower temperature than the room temperature in which the storage volume is intended to be in the discharging phase, where the temperature of the phase-changing material of the heat medium is below the peak temperature.

In a non-claimed example of the present invention, the thermostatic battery is arranged, during a discharging phase after the charging phase, to maintain a storage volume in a substantially thermostatic state by exchanging thermal energy mainly through the conductive container wall.

Providing a thermostatic battery which is arranged to exchange thermal energy with a storage volume during a discharging phase offers the advantage that goods in the storage volume can be stored in a substantially thermostatic state.

In a non-claimed example of the present invention, the container walls of the thermostatic battery consist of an upper container wall, a lower container wall and at least one container side wall connecting the upper container wall and the lower container wall, and the heat insulation is provided on the upper container wall, and the lower container wall is the conductive container wall.

The embodiment in which the upper container wall is provided with the heat-insulating layer and the lower container wall is the conductive container wall, offers the advantage that the thermostatic battery can effectively exchange thermal energy in a direction through the lower container wall. The thermostatic battery can for example be placed in the shopping cart with the lower container wall facing goods that are to be stored in a thermostatic state, for example foodstuffs, so that the exchange of thermal energy with these goods takes place in an effective manner. The lower container wall can for example be placed adjacent to these goods, while the upper insulated container wall can be positioned facing goods that do not necessarily need to be stored in the thermostatic state.

In a non-claimed example of the present invention, the storage volume is determined by a storage height and a storage ground surface, and the heat-insulating layer provided on the upper container wall has a surface area at least equal to the surface area of the storage ground surface. The heat-insulating layer provided on the upper container wall can thus protrude relative to the upper container wall in the plane parallel to the upper container wall. Herein, the thermostatic battery serves as a thermostatic covering such as a lid, arranged to at least partially delimit the storage volume during the discharging phase.

The heat-insulating layer provided on the upper container wall having a surface area at least equal to the surface area of the storage ground surface offers the advantage that the goods which are to be stored and/or transported in the storage volume, can be kept in a substantially thermostatic state. More in particular, the heat-insulating layer ensures that goods not located under the container are still partially shielded, for example by partially preventing heat convection toward the goods in the storage volume. The embodiment offers the advantage that the thermostatic battery can serve as a thermostatic covering such as a lid, at least partially covering the storage volume.

In a non-claimed example of the present invention, the thermostatic battery, for example the thermostatic covering, in addition to the heat-insulating layer provided on the upper container wall, the first heat-insulating layer, comprises a further, second heat-insulating layer, connected to the first heat-insulating layer. In an embodiment of the present invention, the first heat-insulating layer is releasably connected to the second heat-insulating layer. To this end, for example, releasable coupling elements are provided, such as a groove-protrusion set on the first and second heat-insulating layers in places where these two are to be coupled. In an embodiment of the present invention, the second heat-insulating layer and the first heat-insulating layer together at least enclose the storage volume.

The first and second heat-insulating layer being arranged to at least enclose the storage volume, for example to form the storage volume, offers the advantage that the goods that are to be stored and/or transported in the storage volume can be kept in a substantially thermostatic state. More in particular, the first and second heat-insulating layers prevent heat transport, such as heat convection or heat conduction, from/to the goods in the storage volume. In this embodiment, the first heat-insulating layer can serve as a lid in relation to the second heat-insulating layer, which serves as a storage box.

In a non-claimed example of the present invention, the heat-insulating layer is provided on the upper container wall, for example, of the thermostatic covering, also provided on at least part of the at least one container side wall, and the heat-insulating layers provided on the upper container wall and on the at least one container side wall together form the first heat-insulating layer.

The embodiment in which the first heat insulating layer is provided on the upper container wall and on at least part of the at least one container side wall, has the effect that the conductive container wall, particularly the lower container wall, is the only conductive container wall of the container, causing the thermal energy exchange between the heat medium on the one hand and a space outside of the container such as the storage volume or a charging unit on the other hand, to mainly occur through the lower container wall. The advantage of this effect is that the thermal energy exchange occurs in a targeted way toward the goods in the storage volume. This advantage is important, as large losses of heat can occur at the coupling between the first and second insulation layers, for example if the coupling was poorly executed, causing an opening to be formed between the first and second insulation layers.

In a non-claimed example of the present invention, the first heat-insulating layer and the container, particularly the thermostatic covering, together form a lid in relation to the second heat-insulating layer, which for example forms a storage box, for example an open transporting cart. The storage box and the lid can for example together form the storage volume. In an embodiment of the invention, the lid comprises a handle, such as a protruding grip or a gripping groove, for example made from the first heat-insulating layer, for example mounted to the first heat-insulating layer.

Providing the thermostatic battery as a lid, for example provided with a handle, fitted to a storage box, for example allows goods to be easily placed into and taken out of the storage volume.

In a non-claimed example of the present invention, the container walls of the container comprise at least two conductive container walls comprising the first heat-conducting material. In a non-claimed example of the present invention, the container walls of the thermostatic battery consist of an upper container wall, a lower container wall and four container side walls connecting the upper container wall and the lower container wall for forming a beam shape, and the heat-insulating layer is provided on the upper container wall, and two opposite container side walls are conductive container walls.

Providing a plurality of conductive container walls offers the advantage that thermal energy exchange can occur through several container walls. This offers the advantage that the thermostatic battery can be charged more quickly in the charging unit. This offers the additional advantage that the thermostatic battery can keep a plurality of spaces outside of the container, such as a plurality of storage volumes, in a substantially thermostatic state.

Furthermore, in a non-claimed example of the present invention, provides a charging unit for charging the thermostatic battery. More in particular, the charging unit comprises a contact plate arranged, during the charging phase, for coupling to the conductive container wall of the thermostatic battery, for example permanently coupled to the thermostatic battery, such as integrally connected to the conductive container wall, or for example releasable from the conductive container wall. The contact plate of the charging unit is further arranged for exchanging thermal energy with the heat medium in the container of the thermostatic battery through the coupled conductive container wall during the charging phase. To this end, the contact plate is made from a heat-conducting material, for example made from the first heat-conducting material. Exchanging thermal energy between the contact plate of the charging unit and the heat medium of the thermostatic battery is a result of a difference in temperature created between the contact plate and the heat medium by bringing the contact plate to a charging temperature by means of an energy supply, also comprised in the charging unit, wherein the charging temperature depends on the desired thermostatic state and the desired charging rate of the thermostatic battery. In an embodiment of the present invention, the charging temperature is lower or higher than the temperature of the heat medium if the temperature of the heat medium in the discharged state, for example at the start of the charging phase, is higher or lower, respectively, than the desired thermostatic state of the thermostatic battery. In an embodiment of the present invention, the difference in temperature between the contact plate and the heat medium is increased if a higher charging rate is desired. In an embodiment of the present invention, the difference in temperature between the contact plate and the heat medium during the charging phase, for example at the start of the charging phase, is at least 20°C, preferably at least 40°C, more preferably at least 60°C. In an embodiment of the present invention, the difference in temperature between the contact plate and the heat medium is maintained during the charging phase, for example kept substantially unchanged during the charging phase or for example kept at least equally high during the charging phase. In an alternative embodiment of the present invention, the difference in temperature between the contact plate and the heat medium decreases after the start of the charging phase as the charging state of the thermostatic covering progresses. In an embodiment of the present invention, the charging temperature of the contact plate during the charging phase is less than -20°C, preferably less than -40°C, more preferably less than -60°C.

Providing a contact plate for coupling to the conductive container wall during the charging phase, and for exchanging thermal energy between the contact plate and the heat medium in the container through the conductive container wall, offers the advantage that only a simple action is required for connecting the thermostatic battery to the charging unit. Thus, a user of the charging unit, for example a supermarket staff member tasked with charging the thermostatic batteries or an automated device, can easily charge the thermostatic batteries, for example by simply placing the thermostatic battery onto the contact plate without any additional actions. Providing a difference in temperature between the contact plate and the heat medium during the charging phase, for example at the start of the charging phase, of at least 20°C, preferably at least 40°C, more preferably at least 60°C, offers the advantage that a high charging rate can be achieved. Thus, a thermostatic battery of 600 mm x 400 mm x 10 mm can, depending on the difference in temperature created, be charged, for example reach a charging state of 100%, for example receive at least 190 Wh of energy, in less than 1 minute. More in particular, the charging unit provided with a difference in temperature of at least 40°C between the contact plate and the heat medium offers the advantage that a charging rate of at least 14 Wh/(s m²), for example 50 Wh/(s m²), can be achieved. Maintaining the difference in temperature between the contact plate and the heat medium during the charging phase, for example het keeping the difference in temperature substantially unchanged during the charging phase or for example keeping the difference in temperature het at least equally large during the charging phase, offers the advantage that a high charging rate is achieved, since a strong temperature gradient remains between the heat medium and the contact plate. The alternative embodiment of the present invention in which the difference in temperature between the contact plate and the heat medium after the start of the charging phase decreases as the charging state of the thermostatic covering progresses, offers the advantage that the charging state of the thermostatic battery rises quickly in the beginning, which offers advantages in situations where the thermostatic batteries are used at a high frequency but during short periods. The embodiment of the present invention in which the charging temperature of the contact plate during the charging phase is less than -20°C, preferably less than -40°C, more preferably less than -60°C, offers the advantage that a fast cooling of the thermostatic battery is achieved.

In a non-claimed example of the present invention, the contact plate is releasable from the conductive container wall and the contact plate has a shape which is congruous with the shape of the conductive container wall to which the contact plate is to be coupled. If the conductive container wall has a planar shape, then the contact plate preferably also has a planar shape.

Providing congruous shapes between the conductive container wall and the contact plate offers the advantage that little air, for example no air, is caught between both surfaces, which promotes a good thermal energy exchange between the contact plate and the heat medium through the conductive container wall.

In a non-claimed example of the present invention, the charging unit comprises a pressing mechanism arranged for pressing the charging unit, for example the energy supply with contact plate, or for example the energy supply, against the conductive container wall of the thermostatic battery, for instance by moving the energy supply from a first position remote from the conductive container wall to a second position adjacent the conductive container wall, followed by pressing the charging unit, for example the energy supply with contact plate, or for example the energy supply, against the conductive container wall. In an embodiment of the present invention, the moving of the charging unit, for example the energy supply with contact plate, or for example the energy supply, door the pressing mechanism provided in the charging unit, comprises an upward movement of the charging unit, for example of the energy supply with contact plate, or for example of the energy supply from a first position lower than the position of the conductive container wall, preferably the lower container wall, to a second position adjacent the conductive container wall.

Providing a pressing mechanism offers the advantage that a close contact is achieved between the charging unit, such as the energy supply with contact plate or such as the energy supply, on the one hand, and the conductive container wall on the other hand, which offers the advantage that little air, for example no air, is caught between both surfaces, which promotes a good thermal energy exchange between the contact plate and the heat medium through the conductive container wall. Additionally, the pressing mechanism offers the advantage that the charging unit is led toward the conductive container wall, for example if the thermostatic battery is mounted at a fixed position, for example at a fixed height, for example mounted to a wall of a transporting cart, for example the upper wall, as a result of which the thermostatic battery cannot be led toward the charging unit, for example by the user of the thermostatic battery.

In a non-claimed example of the present invention, the contact plate is releasable from the conductive container wall and the conductive container wall and the contact plate are provided with at least one congruous protrusion-indentation set, such as a serrated profile on the contact plate and a negative of said profile on the conductive container wall, for example to provide reference points and/or for example positioning points on the conductive container wall.

Providing the at least one congruous protrusion-indentation set offers the advantage that the user of the charging unit can easily observe in which way the surfaces are to be coupled to each other. Thus, the user of the charging unit can for example ascertain when the two surfaces are optimally coupled, for example at the moment the congruous protrusion and indentation of the protrusion-indentation set fit together. Furthermore, the at least one congruous protrusion-indentation offers the advantage that the thermostatic battery is solidly positioned onto the charging unit, limiting the risk of accidents, for example as a result of the thermostatic battery of the charging unit falling over.

In a non-claimed example of the present invention, the thermal energy to be exchanged between the contact plate and the heat medium is supplied to the contact plate by providing the charging unit with an energy supply, such as one of a Peltier heat exchanger, a fluid heat exchanger, a magnetic heat exchanger, a Joule heat exchanger, a cryogenic heat exchanger, thermal oil exchanger and steam exchanger connected with the contact plate after coupling during the discharging phase. More in particular, the contact plate can, after coupling during the charging phase, directly be a part of the energy supply. The Joule heat exchanger can for example be executed by providing the contact plate as a conductive plate which is heated by passing an electrical current through the plate. The Peltier heat exchanger can for example be executed with the contact plate as the cold or hot plate, depending on the desired thermostatic state of the storage volume. The fluid heat exchanger can for example be executed by providing ducts under the contact plate through which cold or hot matter flows, for example cooled or heated liquid and/or gas such as water, carbon dioxide, ammonia, propane or glycol, depending on the desired thermostatic state of the storage volume, wherein the matter flowing through the ducts brings the contact plate to the desired temperature. In an embodiment of the present invention, the charging unit is arranged for controlling the energy supply such that the contact plate can be brought to a charging temperature which differs from the temperature of the heat medium during the charging phase.

The choice of energy supply depends, for example, on the desired thermostatic state of the storage volume and, for example, the rate at which the thermostatic battery is to be cooled.

In a non-claimed example of the present invention, the contact plate is releasable from the conductive container wall and preferably permanently attached to the energy supply. In a non-claimed example of the present invention, the contact plate is integral to the conductive container wall, with, for example, the contact plate being the first heat-conducting material comprised in the conductive container wall. In the alternative embodiment, in which the contact plate is the first heat-conducting material comprised in the conductive container wall, the charging unit can be provided with a pressing mechanism for moving the energy supply, such as the Peltier heat exchanger, from a first position remote from the thermostatic battery, more in particular remote from the contact plate, to a second position adjacent the contact plate, and the pressing mechanism presses the energy supply against the contact plate.

Providing the contact plate as being releasable from the conductive container wall, for example permanently attached to the energy supply, offers the advantage that the contact plate can be optimized with regard to the energy supply, for example by providing the contact plate with a large quantity of heat-conducting material so that a large quantity of energy can be exchanged with the energy supply, such as with the Joule heat exchanger, with no detrimental effects to the ergonomics of the thermostatic battery, for example by increasing the weight of the thermostatic battery. Making the contact plate integral to the conductive container wall, for example one with the conductive container wall, offers the advantage that no intermediary exchange of thermal energy is needed between the contact plate and the conductive container wall and then between the conductive container wall and the heat medium, for example by conduction.

In a non-claimed example of the present invention, if the thermostatic battery is provided with at least two conductive container walls, the charging unit is provided with at least two contact plates arranged during the charging phase for coupling to the at least two conductive container walls and for exchanging thermal energy with the heat medium in the container of the thermostatic battery. In a non-claimed example of the present invention, the charging unit is provided with as many contact plates as there are conductive container walls provided on the thermostatic battery. Preferably, the plurality of contact plates have congruous shapes with the plurality of conductive container walls, wherein, for example, a first contact plate can be arranged for coupling to a first conductive container side wall by making the two surfaces congruous, and a second contact plate can be arranged for coupling to a second conductive container side wall by making the two surfaces congruous. Preferably, the charging unit is constructed so that when positioning the thermostatic battery, the at least two conductive container walls substantially coincide with the at least two contact plates.

Providing at least two contact plates in the charging unit offers the advantage that charging the thermostatic battery can take place more quickly.

In a non-claimed example of the present invention, the charging unit is provided with at least two contact plates arranged during the charging phase for coupling to the at least two conductive container walls belonging to the two thermostatic batteries, and for exchanging thermal energy with the heat medium in the container of each of the thermostatic batteries.

Furthermore, the present invention provides a use of the thermostatic battery, wherein the thermostatic battery, the charging phase, is charged by storing or taking away thermal energy in the heat medium through the conductive container wall, and/or wherein the thermostatic battery, during the discharging phase, is discharged by taking away or storing thermal energy in the heat medium through the conductive container wall, depending on the desired thermostatic state in the storage volume.

The use of the thermostatic battery of the present invention offers the advantage that the thermostatic battery can be used quickly and easily, for example for storing and/or transporting goods such as foodstuffs during the discharging phase, by the user of the thermostatic battery, for example a transporter of the goods who needs to store the goods safely during transport, for example by supermarket staff when fresh foodstuffs are delivered, or by supermarket customers while doing their groceries.

In an embodiment of the present invention, during the discharging phase, in use, the thermal energy is exchanged by conduction between the storage volume and the conductive container wall, and is further exchanged by conduction between the conductive container wall and the heat medium. In an embodiment of the present invention, if a heat conductor is provided in the thermostatic battery, thermal energy is further exchanged by conduction between the conductive container wall on the one hand, and the heat conductor and the heat medium on the other hand, and is further exchanged by conduction between the heat conductor on the one hand, and the heat medium on the other hand.

Furthermore, the present invention provides a use of the charging unit wherein during the charging phase, the thermal energy is exchanged by conduction between the contact plate and the conductive container wall, and is further exchanged by conduction between the conductive container wall and the heat medium as a result of a difference in temperature being arranged between the contact plate and the heat medium. In an embodiment of the present invention, if a heat conductor is provided in the thermostatic battery, thermal energy is further exchanged by conduction between the conductive container wall on the one hand, and the heat conductor and the heat medium on the other hand, as a result of a difference in temperature being arranged between the contact plate and the heat medium.

The use of the charging unit of the present invention offers the advantage that the thermostatic battery can be charged quickly and easily by the user of the charging unit, for example a supermarket staff member tasked with charging the thermostatic batteries or an automated device.

In an embodiment of the present invention, in use of the charging unit, the thermal energy to be exchanged between the contact plate and the heat medium is supplied to the contact plate by an energy supply such as one of a Peltier heat exchanger, a fluid heat exchanger, a magnetic heat exchanger, a Joule heat exchanger, a cryogenic heat exchanger, and a thermal oil exchanger and a steam exchanger.

The choice of energy supply is dependent on, for example, the desired thermostatic state of the storage volume and of the rate at which the thermostatic battery is to be heated or cooled.

In an embodiment of the present invention, the contact plate, in use, during the charging phase, is brought to a charging temperature that is less than -20°C, preferably less than -40°C, more preferably less than -60°C.

The use of the charging unit wherein the contact plate is brought to a charging temperature that is less than -20°C, preferably less than -40°C, more preferably less than -60°C, offers the advantage that the thermostatic battery can be cooled in a speedy manner due to the fact that in this way, a strong temperature gradient can be created between the heat medium on the one hand and the contact plate on the other hand.

In an embodiment of the present invention, in use, the thermostatic battery is placed onto the charging unit, for example the energy supply with contact plate or for example the energy supply, in such a way that the conductive container wall and the charging unit, for example the energy supply with contact plate or for example the energy supply, are adjacent. In an embodiment of the present invention, the contact plate is releasable from the conductive container wall, and the user of the thermostatic installation uses the at least one congruous protrusion-indentation set provided on the surfaces of the contact plate and the conductive container wall as an aid in correctly positioning the thermostatic battery.

The adjacent positioning of the conductive container wall and the contact plate offers the advantage that the thermal energy exchange occurs efficiently and thus quickly, so that the thermostatic battery can quickly be charged. The use of the at least one congruous protrusion-indentation set offers the advantage that the user of the charging unit is aided in correctly positioning the thermostatic battery. Furthermore, the use of the at least one congruous protrusion-indentation set offers the advantage that the thermostatic battery is solidly positioned onto the charging unit, limiting the risk of accidents, for example as a result of the thermostatic battery of the charging unit falling over.

In an embodiment of the present invention, the thermostatic battery, in use, during the charging phase, is placed in an automated manner, for example by machine, onto the charging unit, for example onto the energy supply with contact plate or for example onto the energy supply, for example by means of a robot arm. In an alternative embodiment, the thermostatic covering onto the charging unit manually, for example by the supermarket staff.

The use of an automated placement of the thermostatic battery onto the charging unit offers the advantage that the placement is less, for example not, susceptible to errors. Thus, a machine user of the charging unit will virtually always place the thermostatic battery onto the charging unit in the correct position. Furthermore, automating a repetitive task can yield economic advantages.

In an embodiment of the present invention, the contact plate is releasable from the conductive container wall, and, in use, the contact plate is moved toward the conductive container wall of the thermostatic battery by the pressing mechanism, and the pressing mechanism presses the contact plate against the conductive container wall. In an alternative embodiment of the present invention in which the contact plate is integral with the conductive container wall, in use, the energy supply is moved toward the contact plate by the pressing mechanism and the pressing mechanism presses the energy supply against the contact plate.

The use of the pressing mechanism for moving the charging unit, for example the energy supply with contact plate, or for example the energy supply, toward the conductive container wall offers the advantage that the charging unit, for example the energy supply with contact plate, or for example the energy supply, and the conductive container wall can be positioned adjacent to one another, such that thermal energy can easily be exchanged between the charging unit, for example the energy supply with contact plate, or for example the energy supply, and the heat medium, through the conductive container wall. This advantage is especially evident if the thermostatic battery is at a fixed position, for example at a fixed height, for example mounted to the upper wall of a transporting cart, since in this situation, the contact plate can still contact the conductive container wall without requiring the thermostatic battery to be released from its fixed position, which in some situations is impossible.

In an embodiment of the present invention, in use, during the charging phase, the thermostatic battery is moved toward the charging unit. In an alternative embodiment of the present invention, the charging unit is a mobile charging unit, and in use, during the charging phase, the mobile charging unit is moved toward the thermostatic battery.

Providing a mobile charging unit offers the advantage that the charging unit can be moved toward the thermostatic battery, which is, for example, advantageous if the thermostatic battery is at a fixed position and thus not mobile.

In an embodiment of the present invention, during the charging phase, the thermostatic battery is at least partly, for example completely, stripped of the first heat insulating layer. In this embodiment, the container wall provided with the first heat insulating layer during the discharging phase is exposed during the charging phase. Preferably, during the charging phase, the thermostatic battery is at least partly stripped of the first heat insulating layer on the at least one container wall, if the thermostatic battery is brought to the charging unit. In an embodiment of the present invention, the thermostatic battery which, during the discharging phase, is used as a lid covering a storage volume, for example as a lid of a transporting cart enclosing a storage volume, is stripped of the first heat insulating layer provided on the at least one container wall during the charging phase. Stripping the first heat insulating layer during the charging phase offers the advantage that, during the discharging phase heat is conducted in a targeted way from/to the storage volume, and that during the discharging phase, heat is conducted in a targeted way from/to the charging unit, wherein the storage volume and the charging unit can be adjacent to different container walls. The thermostatic battery which during the discharging phase is provided with a first heat insulating layer on the upper container wall will optimally conduct heat from/to a storage volume which is for example adjacent to the lower container wall. The same thermostatic battery which, during the charging phase, is stripped of the first heat insulating layer, will optimally conduct heat from/to a charging unit adjacent to any of the container walls. The advantage of this embodiment is particularly evident if the container wall provided with the first heat insulating material during the discharging phase is a second conductive container wall. In an alternative embodiment of the present invention wherein the thermostatic battery during the discharging phase is provided in a fixed position, for example mounted to a permanent wall of a transporting cart, the thermostatic battery, during the charging phase, is stripped of the first heat insulating layer provided on the at least one container wall. The advantage of this embodiment is particularly evident if the thermostatic battery during the discharging phase is releasably mounted to the wall of the transporting cart, and if the first heat insulating layer is part of the transporting cart. The advantage of this embodiment is that the user of the charging unit, during the charging phase, can easily remove the thermostatic battery from the transporting cart and bring in into contact with the charging unit, for example by placing the thermostatic battery onto the charging unit. Contrary to an embodiment in which the charging unit is brought to the thermostatic battery, for example because the thermostatic battery is permanently mounted in a fixed position, for example to de wand of a transporting cart, the transporting cart in the present embodiment can instantly be provided with a new thermostatic battery after the thermostatic battery being removed by the user of the charging unit. This has the effect that the transporting cart is out of use for a shorter time and that space is not needlessly taken up by transport carts coupled to charging units, for example in a charging space.

### Brief description of the drawings

The invention will hereafter be further elucidated in detail by means of the following description and of the appended figures.
Figure 1 shows a side view of a cross section of a thermostatic battery according to an embodiment of the present invention.
Figure 2 shows a perspective view of a cross section of the thermostatic battery of Figure 1 and a charging unit during the charging phase.
Figure 3 shows a perspective view of a cross section of the thermostatic battery of Figure 1 during the discharging phase.
Figure 5 shows a perspective view of an alternative embodiment of a thermostatic battery and a charging unit during the charging phase.
Figure 6 shows a perspective view of an alternative example of a thermostatic battery from figure 1 during the charging phase.

### Embodiments of the invention

The present invention will hereafter be described with respect to particular embodiments and with reference to certain drawings, but the invention is not limited thereto and is limited only by the claims. The drawings shown here are only schematic representations and are nonlimiting. In the drawings, the size of some parts may be exaggerated, which means the parts in question are not drawn to scale, and merely for illustrative purposes. The dimensions and the relative dimensions do not necessarily correspond to actual reductions to practice of the invention.

Furthermore, terms such as "first", "second", "third" and the like in the description and in the claims, are used for distinguishing between similar elements and not necessarily for describing a sequential or chronological order. The terms in question are interchangeable under appropriate circumstances and the embodiments of the invention can operate in other sequences than described or illustrated herein.

The term "comprising" and related terms, as used in the claims, should not be interpreted as being restricted to the means listed thereafter; it does not exclude other elements or steps. It should be interpreted as specifying the presence of the stated features, integers, steps or components as referred to, without however precluding the presence or addition of one or more other features, integers, steps or components, or groups thereof. Thus, the scope of an expression such as "a device comprising means A and B" is not limited to devices consisting only of components A and B. What is meant, in contrast, is that with respect to the present invention, the only relevant components are A and B.

Moreover, terms such as "side", "bottom", "over", "under" and the like in the description and the claims are used for descriptive purposes and not necessarily to indicate relative positions. The terms so used are interchangeable under appropriate circumstances and the embodiments of the invention described herein can operate in other orientations than described or illustrated herein.

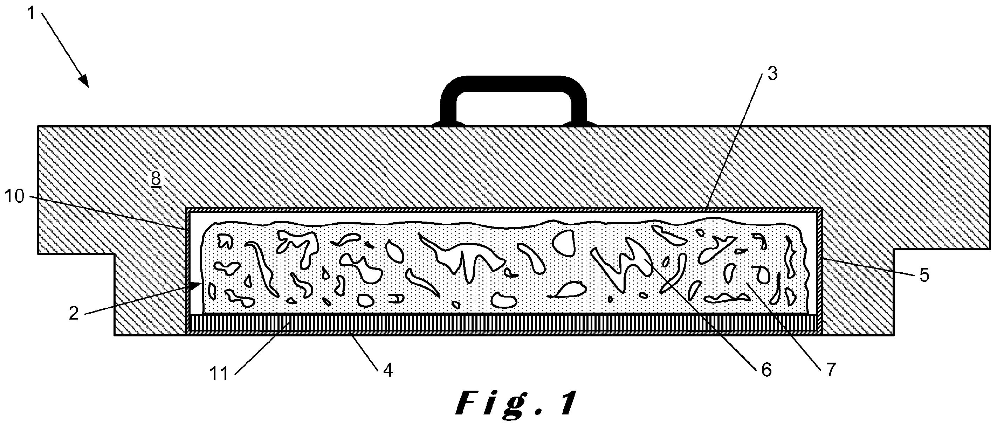

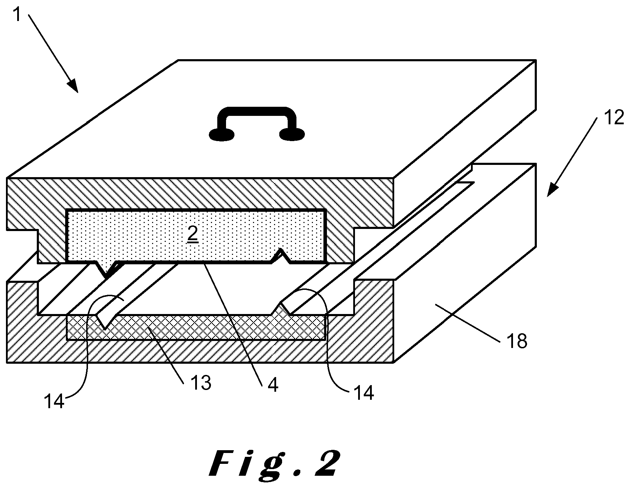

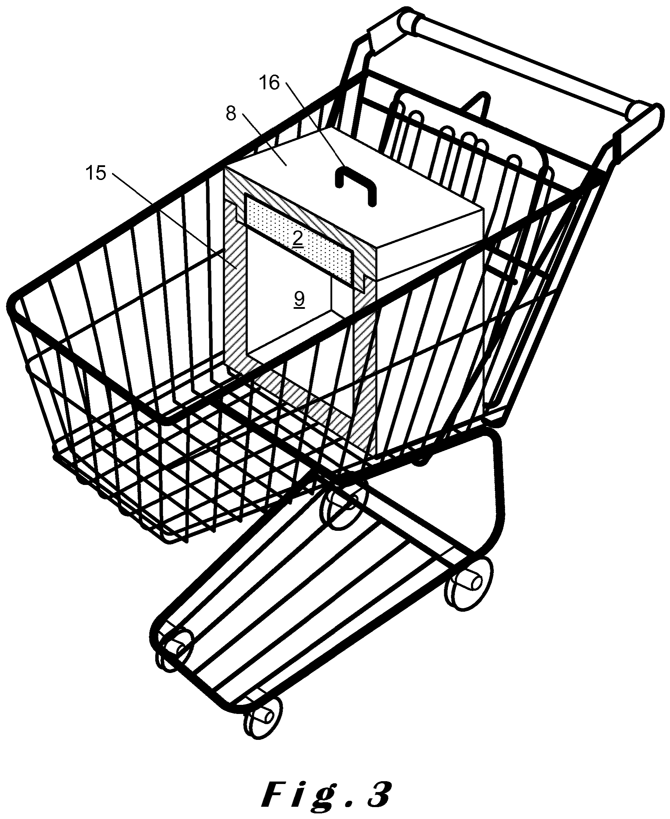

Figure 1 shows a side view of a cross section of a thermostatic battery according to an embodiment of the present invention. The thermostatic battery 1 comprises a container 2 that is defined by liquid-tight container walls comprising an upper container wall 3, a lower container wall 4 comprising a first heat-conducting material 11 forming a flat layer on top of a liquid-tight part extending from the other liquid-tight container walls, and two container side walls 5,10 connecting the upper container wall and the lower container wall. Furthermore, the container provides a heat medium 6 for storing thermal energy, such as a phase-changing material, enclosed by the container walls, wherein the heat medium 6 partially fills the container 2. The heat medium 6 does not completely fill the container 2, since the heat medium 6 may expand as a result of changes in temperature, which can lead to mechanical pressure onto the container walls. The container walls provide some elasticity to absorb this mechanical pressure without breaking, as a breakage can lead to the loss of the liquid-tight character of the container walls. Furthermore, the heat medium 6 surrounds a heat conductor 7 made from a second heat-conducting material that is formed into a metallic foam. The heat medium 6 is located inside the pores of the metallic foam. The heat conductor 7 is arranged for conducting heat from the heat medium 6, where the heat is stored, for example in the phase-changing material, to the lower container wall 4. To that purpose, the heat conductor 7 is attached to the first heat-conducting material 11 of the lower container wall 4. The thermostatic battery 1 also comprises a heat-insulating layer 8, for example a layer of EPS (Expanded Polystyrene), VIPS or aerogel, adjacent the upper container wall 3 and the container side walls 5,10, ensuring that the heat is mainly guided toward the lower container wall 4, which is in contact with a space outside of the container. This space, provided below the lower container wall 4, is for example a charging unit as shown in figure 2 or a storage volume 9 as shown in figure 3. The heat insulating layer preferably has a low thermal conductivity, for example between 0.008 W/mK and 0.04 W/mK.

The figure 2 shows a variant of the thermostatic battery 1 from figure 1 during the charging phase, in which the thermostatic battery 1 is charged with thermal energy, for example with heat or cold, by means of a charging unit 12. The charging unit 12 comprises a contact plate 13 for generating thermal energy, which is transferred, for example by conduction, to the lower container wall 4, for example through a very thin layer of liquid-tight container wall, such as a thin layer of plastic, of the lower container wall 4, and then through the first heat-conducting material 11 of the lower container wall 4, connected to the heat conductor 7. The contact plate 13 is surrounded by contact plate insulation 14, for example the same material as the heat-insulating layer 8, which ensures that the heat generated by the contact plate 13 is transported to the lower container wall 4 as efficiently as possible. Furthermore, the contact plate insulation 14 performs a vapor-tight function to limit vapor formation as much as possible, especially in case the thermostatic battery 1 needs to be cooled. The lower container wall 4 and the contact plate 13 have congruous planar shapes, allowing them to be positioned adjacent to thus optimally exchange thermal energy. The contact plate 13 also performs a thawing function for removing precipitate formed onto the contact plate 13 before the thermostatic battery 1 is installed, as the presence of precipitate can lead to a sub-optimal thermal energy exchange. Furthermore, the lower container wall 4 and the contact plate 13 are provided with congruous protrusion-indentation sets 14 arranged to ensure a stable positioning of the thermal battery onto the charging unit. The two congruous protrusion-indentation sets 14 provided on the lower container wall 4 and on the contact plate 13 have opposite directions, arranged to achieve a *PokaYoke* design wherein the user of the thermostatic battery 1 can place the thermostatic battery 1 onto the charging unit 12 in only one possible position. The embodiments of the charging unit 12 and the thermostatic battery 1 as shown in the figures 1-3 do not as such require a pressing system to create a closely mating contact between the contact plate 13 and the lower container wall 4, since the weight of the thermostatic battery 1 ensures sufficient pressing of the thermostatic battery 1 onto the charging unit 12. The charging unit 12 is for example a static installation provided at the entrance of a supermarket, where the supermarket customer or the supermarket staff place the thermostatic batteries 1 after being used by a supermarket customer. The charging unit 12 may for example also be mobile, so that the charging unit is brought up to the thermostatic batteries for executing the charging phase.

The figure 3 shows the thermostatic battery 1 from figure 1 during the discharging phase, in which the thermostatic battery 1 is discharged of thermal energy by receiving or releasing heat stored in the heat medium 7. In the embodiment from figure 3, the thermostatic battery encloses a storage volume 9 arranged in a supermarket customer's shopping cart. The storage volume 9 is arranged for storing and transporting therein goods such as foodstuffs that should be kept cool. To this end, during the charging phase, as shown in figure 2, the thermostatic battery 1 is charged with cold, more specifically, heat is conveyed out of the thermostatic battery 1 during the charging phase. In order to keep the goods stored in the storage volume 9 optimally cooled, in addition to the heat-insulating layer 8, the first heat-insulating layer, a second heat-insulating layer 15 is provided, for example the same material as the first heat-insulating layer 8, which together with the first heat-insulating layer 8 encloses the storage volume 9. To keep the use of the thermostatic battery 1 simple for the supermarket customer, the first heat-insulating layer 8 and the second heat-insulating layer 15 connected in such a way as to be releasable from each other, and the thermostatic battery 1 is provided with a handle 16. In the embodiment shown in figure 3, the thermostatic battery (1), in other words, is provided as a thermostatic covering that serves as a lid for a storage box formed door the second heat-insulating layer 15.

In a non-claimed example of the discharging phase of the thermostatic battery 1 from figure 1, the battery can be used for keeping cool goods in a storage volume 9 arranged on a pallet, for example when goods that are sensitive to temperature are transported by supermarket staff.

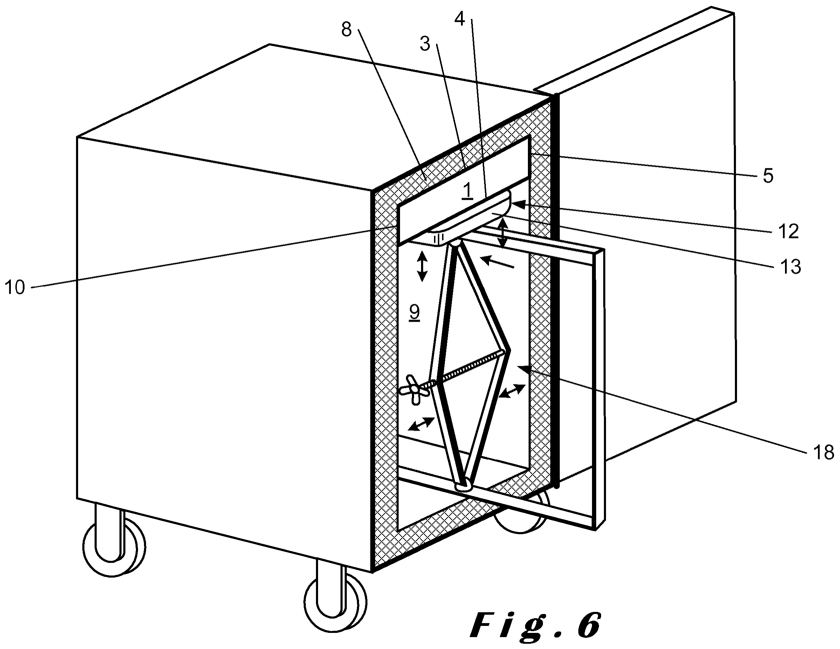

According to the invention the thermostatic battery 1 from figure 1, the thermostatic battery 1 is mounted in a thermally insulated transporting cart, for example mounted to the inside of the transporting cart on the upper wall of the transporting cart, and the content of the transporting cart determines the storage volume 9 that is to be maintained in a thermostatic state. Here, the first heat-insulating layer 8 delimiting the upper container wall 3 and the container side walls 5,10 is part of the mobile transporting cart, and the remaining container wall, the lower container wall 4, is free from the first heat insulating layer 8, for efficiently exchanging thermal energy through the lower container wall 4. The transporting cart can for example be provided with a door in one of the side walls of the transporting cart to allow goods to be placed into the storage volume 9. In this alternative non-claimed example of the thermostatic battery 1 from figure 1, the mobile charging unit 12 from figure 2 can be used to press the contact plate 13 against the lower container wall 4 by means of the pressing mechanism (18), as shown in figure 6.

Figure 6 additionally shows an example not part of the claimed invention of the thermostatic battery 1 which is permanently or releasably mounted to a permanent wall of the transporting cart. The battery 1 in this figure does not serve as a lid. Furthermore, the first and second insulating layers in figure 6 are shown permanently coupled. Herein, together, they enclose the storage volume 9.

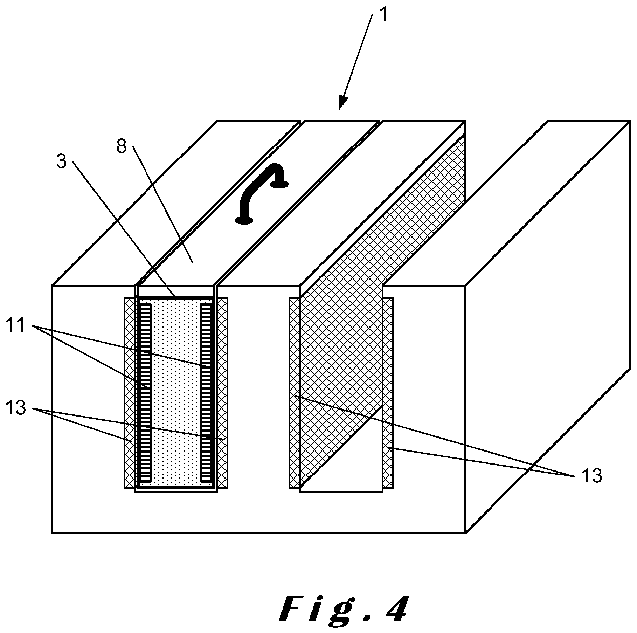

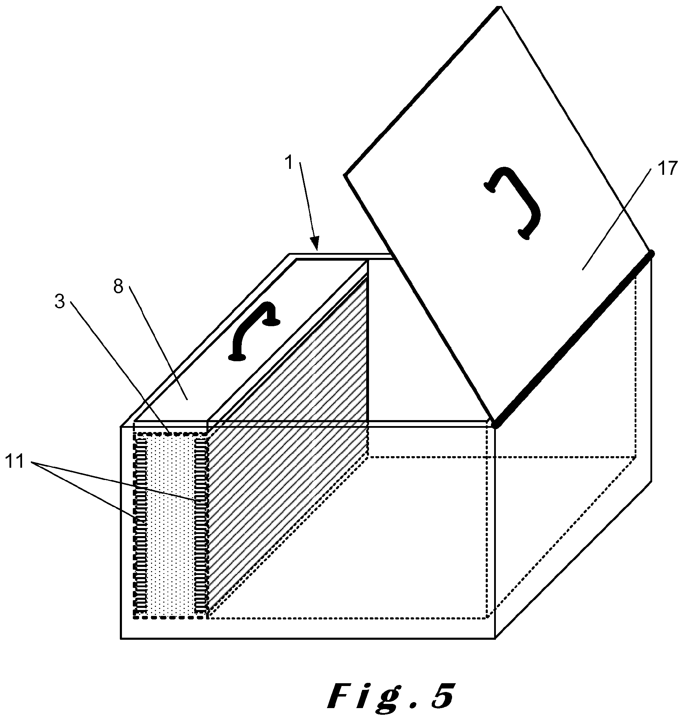

Figures 4 and 5 show alternative embodiments of the thermostatic battery 1 in the charging and discharging phase, respectively. In these alternative embodiments, the thermostatic battery 1 is only provided with the first heat-insulating layer 8 along the upper container wall 3 of the container 2, and the first heat-conducting material 11 is provided along the container side walls 5,10. In the figure 5, the second heat-insulating layer 15 comprises a lid 17 arranged for flapping down, to be easily flapped up and down by the supermarket customer. In the figure 4, the charging unit comprises a plurality of slots, each provided with two contact plates 13, each with a pressing mechanism (not shown in the figure), wherein each slot is arranged for sliding the thermostatic batteries 1 into the slots, after which the contact plates 13 are pressed against the conductive container side walls 5,10 by the pressing mechanism. The advantage of such an installation is that less space is taken up by the charging unit 12, and moreover, that the thermostatic battery 1 is charged more quickly.

### List of reference numbers:

- **1**: thermostatic battery
- **2**: container
- **3**: upper container wall
- **4**: lower container wall
- **5**: first container side wall
- **6**: heat medium
- **7**: heat conductor
- **8**: first heat-insulating layer
- **9**: storage volume
- **10**: second container side wall
- **11**: first heat-conducting material
- **12**: charging unit
- **13**: contact plate
- **14**: protrusion-indentation set
- **15**: second heat-insulating layer
- **16**: handle
- **17**: flap-down lid
- **18**: pressing mechanism

## Claims

1. Use of a thermostatic battery (1) for keeping a storage volume (9) in a substantially thermostatic condition during a discharging phase and use of a charging unit (12) for charging the thermostatic battery (1) during a charging phase prior to the discharging phase,
• wherein the thermostatic battery (1) comprises:
∘ a container (2) defined by liquid-tight container walls, wherein one of the container walls is a conductive container wall provided with a first heat-conducting material, and
∘ a heat medium (6) enclosed by the container walls, arranged for storing thermal energy,
wherein, during the discharging phase, the thermostatic battery is releasably mounted to a wall of a transporting cart enclosing the storage volume (9), and wherein during the charging phase, the thermostatic battery (1) is brought to the charging unit (12) by removing the thermostatic battery (1) from the transporting cart and bringing the thermostatic battery (1) into contact with the charging unit (12),
wherein, during the discharging phase, the thermostatic battery (1) is discharged by exchanging thermal energy between the heat medium (6) and the storage volume (9) through a first conductive container wall,
**characterized in that**, the charging unit (12) comprises a contact plate (13) and **in that** during the charging phase, the contact plate (13) of the charging unit (12) is coupled to said first conductive container wall of the thermostatic battery (1) and exchanges thermal energy with the heat medium (6) in the container (2) of the thermostatic battery (1) as a result of the charging unit providing a difference in temperature between the contact plate (13) and the heat medium (6).

2. Use according to the previous claims, wherein the heat medium (6) at least partially encloses a heat conductor (7) made from a second heat-conducting material wherein the heat conductor is adjacent to the conductive container wall.

3. Use according to the previous claim wherein the second heat-conducting material from which the heat conductor is made is a metal foam.

4. Use according to any one of the previous claims, wherein the thermostatic battery (1) comprises a first heat insulating layer (8), arranged on at least one container wall, and wherein at least part of the conductive container wall remains free for exchanging thermal energy through the conductive container wall.

5. Use according to the previous claim, wherein the storage volume (9) is enclosed by the first heat insulating layer (8) and a second heat insulating layer, connected to the first heat insulating layer (8).

6. Use according to the previous claim wherein the charging unit (12) is a static unit.

7. Use according to any of the previous claims wherein the thermostatic battery (1) is placed onto the contact plate (13) by machine.

8. Use according to any of the previous claims , wherein the thermostatic battery (1) is placed onto the contact plate (13) in such a way that the conductive container wall and contact plate (13) are adjacent.

9. Use according to any of the previous claims wherein a pressing mechanism (18) is used for pressing the contact plate (13) against the conductive container wall of the thermostatic battery (1).

## Patentansprüche

1. Verwendung einer thermostatischen Batterie (1), um ein Speichervolumen (9) während einer Entladephase in einem im Wesentlichen thermostatischen Zustand zu halten, und Verwendung einer Ladeeinheit (12) zum Aufladen der thermostatischen Batterie (1) während einer Ladephase vor der Entladephase,
• wobei die thermostatische Batterie (1) Folgendes umfasst:
∘ einen Behälter (2), definiert durch flüssigkeitsdichte Behälterwände, wobei eine der Behälterwände eine leitende Behälterwand ist, versehen mit einem ersten wärmeleitenden Material, und
∘ ein durch die Behälterwände eingeschlossenes Wärmeträgermedium (6), angeordnet, um thermische Energie zu speichern,
wobei die thermostatische Batterie, während der Entladephase, freigebbar an einer Wand eines Einkaufswagens, der das Speichervolumen (9) umschließt, montiert ist, und wobei die thermostatische Batterie (1), während der Ladephase, zur Ladeeinheit (12) gebracht wird, indem die thermostatische Batterie (1) aus dem Einkaufswagen entfernt wird und die thermostatische Batterie (1) in Kontakt mit der Ladeeinheit (12) gebracht wird,
wobei die thermostatische Batterie (1), während der Entladephase, entladen wird, indem thermische Energie zwischen dem Wärmeträgermedium (6) und dem Speichervolumen (9) durch eine erste leitende Behälterwand ausgetauscht wird,
**dadurch gekennzeichnet, dass** die Ladeeinheit (12) eine Kontaktplatte (13) umfasst, und dadurch, dass die Kontaktplatte (13) der Ladeeinheit, während der Ladephase, an die erwähnte erste leitende Behälterwand der thermostatischen Batterie (1) gekoppelt wird und aufgrund dessen thermische Energie mit dem Wärmeträgermedium (6) im Behälter (2) der thermostatischen Batterie (1) austauscht, dass die Ladeeinheit einen Temperaturunterschied zwischen der Kontaktplatte (13) und dem Wärmeträgermedium (6) liefert.

2. Verwendung nach den vorigen Ansprüchen, wobei das Wärmeträgermedium (6) den Wärmeleiter (7), hergestellt aus einem zweiten wärmeleitenden Material, zumindest teilweise umschließt, wobei der Wärmeleiter an die leitende Behälterwand anliegt.

3. Verwendung nach dem vorigen Anspruch, wobei das zweite wärmeleitende Material, aus dem der Wärmeleiter hergestellt ist, ein Metallschaum ist.

4. Verwendung nach irgendeinem der vorigen Ansprüche, wobei die thermostatische Batterie (1) eine erste wärmedämmende Schicht (8) umfasst, angeordnet an mindestens einer Behälterwand, und wobei zumindest ein Teil der leitenden Behälterwand zum Austauschen von thermischer Energie durch die leitende Behälterwand frei bleibt.

5. Verwendung nach dem vorigen Anspruch, wobei das Speichervolumen (9) durch die erste wärmedämmende Schicht (8) und eine zweite wärmedämmende Schicht, verbunden mit der ersten wärmedämmenden Schicht (8), umschlossen ist.

6. Verwendung nach dem vorigen Anspruch, wobei die Ladeeinheit (12) eine statische Einheit ist.

7. Verwendung nach irgendeinem der vorigen Ansprüche, wobei die thermostatische Batterie (1) maschinell auf die Kontaktplatte (13) gelegt wird.

8. Verwendung nach irgendeinem der vorigen Ansprüche, wobei die thermostatische Batterie (1) so auf die Kontaktplatte (13) gelegt wird, dass die leitende Behälterwand und die Kontaktplatte aneinander anliegen.

9. Verwendung nach irgendeinem der vorigen Ansprüche, wobei ein Pressmechanismus (18) verwendet wird, um die Kontaktplatte (13) an die leitende Behälterwand der thermostatischen Batterie (1) zu pressen.

## Revendications

1. Utilisation d'une batterie thermostatique (1) pour maintenir un volume de stockage (9) dans un état sensiblement thermostatique pendant une phase de décharge et utilisation d'une unité de charge (12) pour charger la batterie thermostatique (1) pendant une phase de charge précédant la phase de décharge,
- dans laquelle la batterie thermostatique (1) comprend :
∘ un récipient (2) défini par des parois étanches aux liquides, dans laquelle l'une des parois de récipient est une paroi de récipient conductrice pourvue d'un premier matériau thermoconducteur, et
∘ un fluide caloporteur (6) enfermé par les parois de récipient, agencé pour stocker l'énergie thermique,
dans laquelle, pendant la phase de décharge, la batterie thermostatique est montée de manière amovible sur une paroi d'un chariot de transport entourant le volume de stockage (9), et dans laquelle, pendant la phase de charge, la batterie thermostatique (1) est amenée vers l'unité de charge (12) en retirant la batterie thermostatique (1) du chariot de transport et en amenant la batterie thermostatique (1) en contact avec l'unité de charge (12),
dans laquelle, pendant la phase de décharge, la batterie thermostatique (1) est déchargée par échange d'énergie thermique entre le fluide caloporteur (6) et le volume de stockage (9) à travers une première paroi de récipient conductrice,
**caractérisée en ce que** l'unité de charge (12) comprend une plaque de contact (13) et **en ce que**, pendant la phase de charge, la plaque de contact (13) de l'unité de charge (12) est couplée à ladite première paroi de récipient conductrice de la batterie thermostatique (1) et échange de l'énergie thermique avec le fluide caloporteur (6) dans le récipient (2) de la batterie thermostatique (1) en raison du fait que l'unité de charge fournit une différence de température entre la plaque de contact (13) et le fluide caloporteur (6).

2. Utilisation selon les revendications précédentes, dans laquelle le fluide caloporteur (6) entoure au moins partiellement un conducteur de chaleur (7) composé d'un second matériau thermoconducteur, dans laquelle le conducteur de chaleur est adjacent à la paroi de récipient conductrice.

3. Utilisation selon la revendication précédente, dans laquelle le second matériau thermoconducteur de chaleur à partir duquel le conducteur de chaleur est fabriqué, est une mousse métallique.

4. Utilisation selon l'une quelconque des revendications précédentes, dans laquelle la batterie thermostatique (1) comprend une première couche d'isolation thermique (8), agencée sur au moins une paroi de récipient, et dans laquelle au moins une partie de la paroi de récipient conductrice reste libre pour échanger de l'énergie thermique à travers la paroi de récipient conductrice.

5. Utilisation selon la revendication précédente, dans laquelle le volume de stockage (9) est entouré par la première couche d'isolation thermique (8) et une seconde couche d'isolation thermique, reliée à la première couche d'isolation thermique (8).

6. Utilisation selon la revendication précédente, dans laquelle l'unité de charge (12) est une unité statique.

7. Utilisation selon l'une quelconque des revendications précédentes, dans laquelle la batterie thermostatique (1) est placée sur la plaque de contact (13) par une machine.

8. Utilisation selon l'une quelconque des revendications précédentes, dans laquelle la batterie thermostatique (1) est placée sur la plaque de contact (13) de telle manière que la paroi de récipient conductrice et la plaque de contact (13) soient adjacentes.

9. Utilisation selon l'une quelconque des revendications précédentes, dans laquelle un mécanisme de pression (18) est utilisé pour presser la plaque de contact (13) contre la paroi de récipient conductrice de la batterie thermostatique (1).
